# EUROPÄISCHE PATENTSCHRIFT

(11) **EP 0 749 462 B1**
(45) Veröffentlichungstag und Bekanntmachung des Hinweises auf die Patenterteilung: **09.09.1998**
(21) Anmeldenummer: 95910536.2
(22) Anmeldetag: 28.02.1995
(51) Int. Cl.: C09D 133/06, C08G 18/62, C08F 220/18

(54) **BESCHICHTUNGSMITTEL AUF BASIS EINES VERNETZBAREN HYDROXYLGRUPPENHALTIGEN POLY(METH)ACRYLATHARZES**
COATING AGENT BASED ON A POLY(METH)ACRYLATE RESIN WHICH CAN BE CROSSLINKED AND CONTAINS HYDROXYL GROUPS
AGENT DE REVETEMENT A BASE D'UNE RESINE RETICULABLE D'ACRYLATE OU DE POLYMETHACRYLATE CONTENANT DES GROUPES HYDROXYLE

(30) Priorität: 05.03.1994 DE 4407415
(43) Veröffentlichungstag der Anmeldung: 27.12.1996
(73) Patentinhaber: BASF Coatings Aktiengesellschaft, 48165 Münster (DE)
(72) Erfinder: RINK, Heinz-Peter, D-48153 Münster (DE); BRÜNNEMANN, Michael, D-48165 Münster (DE)
(86) Internationale Anmeldenummer: EP9500732
(87) Internationale Veröffentlichungsnummer: WO9523832

(56) Entgegenhaltungen:
- EP-A- 0 337 744
- US-A- 5 279 862
- PATENT ABSTRACTS OF JAPAN vol. 12, no. 398 (C-538) & JP,A,63 142 009 (NIPPON SHOKUBAI KK)
- PATENT ABSTRACTS OF JAPAN vol. 14, no. 220 (C-717) & JP,A,02 051 571 (DAINIPPON INK & CHEM. INC)
- PATENT ABSTRACTS OF JAPAN vol. 14, no. 96 (C-692) & JP,A,01 304 162 (HONNY CHEM IND CO LTD)

## Beschreibung

Gegenstand der vorliegenden Erfindung ist ein Beschichtungsmittel, enthaltend
(A) mindestens ein hydroxylgruppenhaltiges Polyacrylatharz, das erhältlich ist aus
   (a) einem cycloaliphatischen Ester der Methacrylsäure und/oder Acrylsäure oder einem Gemisch aus solchen Monomeren,
   (b) einem hydroxylgruppenhaltigen Alkylester der Methacrylsäure und/oder Acrylsäure oder Gemischen aus solchen Monomeren,
   (c) ggf. einem von (a) und (b) verschiedenen hydroxylgruppenhaltigen, ethylenisch ungesättigten Monomeren oder einem Gemisch aus solchen Monomeren,
   (d) einem von (a), (b) und (c) verschiedenen aliphatischen Ester der Methacryl- und/oder Acrylsäure oder einem Gemisch aus solchen Monomeren,
   (e) ggf. einem von (a), (b), (c) und (d) verschiedenen vinylaromatischen Kohlenwasserstoff oder einem Gemisch aus solchen Monomeren und
   (f) ggf. eines von (a), (b), (c), (d) und (e) verschiedenen weiteren ethylenisch ungesättigten Monomeren oder einem Gemisch aus solchen Monomeren,
      und
(B) mindestens ein Vernetzungsmittel.

Die vorliegende Erfindung betrifft außerdem Verfahren zur Herstellung eines mehrschichtigen, schützenden und/oder dekorativen Überzuges auf einer Substratoberfläche sowie die Verwendung der Beschichtungsmittel im Bereich der Autoreparaturlackierung.

Beschichtungsmittel auf der Basis von hydroxylgruppenhaltigen Polyacrylatharzen und Vernetzungsmitteln sind beispielsweise aus der JP-OS 4-1254 bekannt. Die als Bindemittel eingesetzten hydroxylgruppenhaltigen Polyacrylatharze sind dabei erhältlich aus hydroxylgruppenhaltigen Monomeren, Alkylacrylaten, Alkylmethacrylaten, ggf. Styrol sowie ggf. ethylenisch ungesättigten Polymeren. Dabei ist es erfindungswesentlich, daß das Polyacrylatharz unter Verwendung von 4-t-Butylcyclohexylacrylat und/oder 4-t-Butylcyclohexylmethacrylat als Monomerkomponente hergestellt worden ist. Als hydroxylgruppenhaltiges Monomer wird insbesondere Hydroxiethylacrylat und/oder Hydroxiethylmethacrylat eingesetzt.

Diese aus der JP-OS 4-1254 bekannten Beschichtungsmittel weisen insbesondere bei Verwendung als transparenter Decklack über einer Basislackschicht vor allem den Nachteil auf, daß bei Verwendung von Hydroxiethylacrylat und/oder Hydroxiethylmethacrylat als OH-Monomer Beschichtungen mit einer unzureichenden Haftung auf der Basislackschicht resultieren. Nachteilig bei diesen aus der JP-OS 4-1254 bekannten Beschichtungsmitteln ist ferner die unzureichende Topfzeit der Beschichtungsmittel.

Weiterhin ist aus der US-A-5,279,862 ein Überzugsmittel bekannt, das neben einem hydroxylgruppenhaltigen Acrylatcopolymerisat einen isocyanatgruppenhaltigen Vernetzer enthält.

Ferner ist aus der EP-A-588 314 ein Überzugsmittel bekannt, das eine Mischung aus 2 verschiedenen, hydroxylgruppenhaltigen Acrylatcopolymerisaten und einen isocyanatgruppenhaltigen Vernetzer enthält.

Schließlich ist aus der JP-A-2-245 268 ein Überzugsmittel bekannt, das neben einem isocyanatgruppenhaltigen Vernetzer ein hydroxylgruppenhaltiges Acrylatcopolymerisat auf Basis Hydroxybutyl(meth)acrylat enthält.

Der vorliegenden Erfindung lag somit die Aufgabe zugrunde, Beschichtungsmittel zur Verfügung zu stellen, die bei Verwendung als transparenter Decklack über einer pigmentierten Basislackschicht zu Beschichtungen mit einer gegenüber den aus der JP-OS 4-1254 bekannten Beschichtungsmitteln verbesserten Haftung zum Klarlack führen. Gleichzeitig sollten dabei die resultierenden Beschichtungen eine gute Chemikalienbeständigkeit sowie eine gute Witterungsbeständigkeit aufweisen. Ferner sollten die Beschichtungsmittel für die Autoreparaturlackierung geeignet sein, d.h. sie sollten bei niedrigen Temperaturen von im allgemeinen unter 120°C, bevorzugt unter 80°C, aushärtbar sein. Außerdem sollten die Beschichtungsmittel auch bei diesen niedrigen Temperaturen schnell aushärten (schnelle Staub- und Klebfreiheit sowie schnelle Durchtrocknung), dabei aber eine möglichst lange Verarbeitbarkeit (Topfzeit) aufweisen.

Weiterhin sollten die Beschichtungsmittel einen guten Decklackstand aufweisen und bei Verwendung als Klarlack über einer Basislackschicht die darunterliegende Basislackschicht nur möglichst wenig anlösen sowie einen guten Hell-/Dunkeleffekt bei der Aufsicht unter verschiedenen Winkeln zeigen. Schließlich sollten die Beschichtungsmittel einen sehr guten Verlauf zeigen und unter den Bedingungen der Autoreparaturlackierung ein gutes Applikationsverhalten zeigen.

Überraschenderweise wird diese Aufgabe durch ein Beschichtungsmittel der eingangs genannten Art gelöst, das dadurch gekennzeichnet ist, daß die Komponente (A) ein hydroxylgruppenhaltiges Polyacrylatharz ist, das erhältlich ist, indem
(a) 5 bis 80 Gew.-% der Komponente (a),
(b) 10 bis 50 Gew.-% der Komponente (b),
(c) 0 bis 25 Gew.-% der Komponente (c),
(d) 5 bis 80 Gew.-% der Komponente (d),
(e) 0 bis 40 Gew.-% der Komponente (e) und
(f) 0 bis 40 Gew.-% der Komponente (f)
zu einem Polyacrylatharz mit einem zahlenmittleren Molekulargewicht Mn von 1000 bis 5000, einem Verhältnis von gewichtsmittlerem Molekulargewicht Mw zu zahlenmittlerem Molekulargewicht Mn von weniger als 5,0 und einer OH-Zahl von 60 bis 180 mg KOH/g polymerisiert werden, wobei die Summe der Gewichtsanteile der Komponenten (a) bis (f) stets 100 Gew.-% beträgt und wobei als Komponente (b) nur Monomere oder Mischungen von Monomeren eingesetzt werden, die bei alleiniger Polymerisation des jeweiligen Monomers ein Polyacrylat-und/oder Polymethacrylatharz mit einer Glasübergangstemperatur von -10°C bis +6°C oder von +60°C bis 80°C ergeben.

Gegenstand der vorliegenden Erfindung ist außerdem ein Verfahren zur Herstellung eines mehrschichtigen Überzuges auf einer Substratoberfläche unter Verwendung dieser Beschichtungsmittel sowie die Verwendung der Beschichtungsmittel im Bereich der Autoreparaturlackierung.

Es ist überraschend und war nicht vorhersehbar, daß die erfindungsgemäßen Beschichtungsmittel bei Verwendung als transparenter Decklack über einer pigmentierten Basislackschicht eine deutlich verbesserte Haftung zur Basislackschicht aufweisen und dabei gleichzeitig eine gute Chemikalienbeständigkeit sowie Witterungsbeständigkeit aufweisen. Vorteilhaft ist ferner, daß die Beschichtungsmittel bei niedrigen Temperaturen aushärtbar sind und so für den Bereich der Autoreparaturlackierung einsetzbar sind. Selbst bei Härtung der Beschichtungsmittel bei diesen niedrigen Temperaturen härten die Beschichtungsmittel schnell aus, weisen dabei aber gleichzeitig eine lange Verarbeitbarkeit auf. Weiterhin weisen die erfindungsgemäßen Beschichtungsmittel den Vorteil eines guten Decklackstandes auf und zeigen unter den Bedingungen der Autoreparaturlackierung einen sehr guten Verlauf und ein gutes Applikationsverhalten. Schließlich weisen die erfindungsgemäßen Beschichtungsmittel bei Verwendung als Klarlack über einer Basislackschicht den Vorteil auf, daß sie die Basislackschicht nur wenig anlösen und den Metalleffekt nur sehr gering beeinflußen.

Im folgenden werden nun die einzelnen Bestandteile des erfindungsgemäßen Beschichtungsmittels näher erläutert.

Das erfindungsgemäß eingesetzte Polyacrylatharz (A) ist erhältlich, indem
(a) 5 bis 80 Gew.-%, bevorzugt 5 bis 30 Gew.-%, eines cycloaliphatischen Esters der Methacrylsäure und/oder Acrylsäure oder eines Gemisches aus solchen Monomeren,
(b) 10 bis 50 Gew.-%, bevorzugt 15 bis 40 Gew.-%, eines hydroxylgruppenhaltigen Alkylesters der Methacrylsäure und/oder Acrylsäure oder eines Gemisches aus solchen Monomeren,
(c) 0 bis 25 Gew.-%, bevorzugt 0 bis 15 Gew.-%, eines von (a) und (b) verschiedenen hydroxylgruppenhaltigen, ethylenisch ungesättigten Monomeren oder eines Gemisches aus solchen Monomeren,
(d) 5 bis 80 Gew.-%, bevorzugt 5 bis 30 Gew.-%, eines von (a), (b), (c) und (f) verschiedenen aliphatischen Esters der Methacryl- und/oder Acrylsäure oder eines Gemisches aus solchen Monomeren,
(e) 0 bis 40 Gew.-%, bevorzugt 10 bis 30 Gew.-%, eines von (a), (b), (c), (d) und (f) verschiedenen vinylaromatischen Kohlenwasserstoffes oder eines Gemisches aus solchen Monomeren und
(f) 0 bis 40 Gew.-%, bevorzugt 0 bis 30 Gew.-%, eines von (a), (b), (c), (d) und (e) verschiedenen weiteren ethylenisch ungesättigten Monomeren oder eines Gemisch aus solchen Monomeren,
zu einem Polyacrylatharz mit einem zahlenmittleren Molekulargewicht Mn von 1000 bis 5000, einem Verhältnis von gewichtsmittlerem Molekulargewicht Mw zu zahlenmittlerem Molekulargewicht Mn von weniger als 5,0, bevorzugt von 1,8 bis 4,0 und einer OH-Zahl von 60 bis 180, bevorzugt von 100 bis 150 mg KOH/g polymerisiert werden, wobei die Summe der Gewichtsanteile der Komponenten (a) bis (f) stets 100 Gew.-% beträgt und wobei als Komponente (b) nur Monomere oder Mischungen von Monomeren eingesetzt werden, die bei alleiniger Polymerisation des jeweiligen Monomers ein Polyacrylat-und/oder Polymethacrylatharz mit einer Glasübergangstemperatur von -10°C bis +6°C oder von +60°C bis 80°C ergeben.

Die Polymerisation der Monomerkomponenten (a) bis(f) wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz-und Kühleinrichtungen sowie mit einem Rückflußkühler, in dem flüchtige Bestandteile, wie z.B. Styrol, zurückgehalten werden, ausgerüstet. Die Polymerisationsreaktion wird bei Temperaturen von 100 bis 180°C, bevorzugt 130 - 170°C, unter Verwendung von geeigneten Polymerisationsinitiatoren und ggf. Polymerisationsreglern durchgeführt.

Für die Herstellung der Polyacrylatharze (A) sind beispielsweise tert.-Butylgruppen enthaltende Initiatoren, wie z.B. Di.-tert.-butylperoxid, tert.-Butylhydroperoxid, 2,2-Di-tert.-butylperoxibutan und 1,3-Bis-(tert.-butylperoxiisopropyl-)-benzol, Dibenzoylperoxid, tert.-Butylperoxi-2-ethylhexanoat, tert.-Butylperoxi-3,5,5-trimethylhexanoat, tert.-Butylperoxipivalat, Dicumylperoxid, Cumylhydroperoxid, tert.-Amylperoxibenzoat, tert.-Amylperoxi-2-ethylhexanoat, Diacylperoxide, wie z.B. Diacetylperoxid, Peroxiketale, 2,2-Di-(tert.-amyl-peroxi-)propan, Ethyl-3,3-di-(tert.-amylperoxi-)-buty-rat und thermolabile hochsubstituierte Ethanderivate, beispielsweise auf Basis silylsubstituierter Ethanderivate und auf Basis Benzpinakol geeignet. Weiterhin können auch aliphatische Azoverbindungen, wie beispielsweise Azoisovaleronitril und Azobiscyclohexannitril, eingesetzt werden.

Die Initiatormenge beträgt in den meisten Fällen 0,1 bis 8 Gew.-%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die erfindungsgemäß eingesetzten Polyacrylatharze ein zahlenmittleres Molekulargewicht von 1000 bis 5000, vorzugsweise 1800 bis 4000 (bestimmt durch Gelpermeationschromatographie unter Verwendung von Polystyrol als Eichsubstanz) aufweisen.

Die Säurezahl des Polyacrylatharzes (A) liegt üblicherweise zwischen 0 und 30 mg KOH/g.

Die Säurezahl der erfindungsgemäß eingesetzten Polyacrylatharze kann vom Fachmann durch Einsatz entsprechender Mengen der Komponente (f) eingestellt werden. Analoges gilt für die Einstellung der Hydroxylzahl. Sie ist über die Menge an eingesetzter Komponente (b) und (c) steuerbar.

Beispiele für als Komponente (a) geeignete cycloaliphatische Ester der Acrylsäure und/oder Methacrylsäure sind Cyclohexylacrylat, Cyclohexylmethacrylat, 4-tert.-Butylcyclohexylacrylat, 4-tert.-Butylcyclohexylmeth-acrylat, Isobornylacrylat und Isobornylmethacrylat.

Bevorzugt wird als Komponente (a) 4-tert.-Butylcyclohexylacrylat und/oder 4-tert.-Butylcyclohexylmeth-acrylat eingesetzt.

Es ist erfindungswesentlich, daß als Komponente (b) nur Monomere oder Mischungen von Monomeren eingesetzt werden, die bei alleiniger Polymerisation des jeweiligen Monomers ein Polyacrylat- und/oder Polymethacrylatharz mit einer Glasübergangstemperatur von -10°C bis +6°C, oder von +60°C bis 80°C ergeben. Dies bedeutet, daß bei Verwendung von Mischungen verschiedener Monomerer als Komponente (b) selbstverständlich auch solche Mischungen geeignet sind, die bei alleiniger Polymerisation der Komponente (b) ein Polyacrylat- und/oder Polymethacrylatharz mit einem Tg-Wert außerhalb dieser für die einzelnen Monomeren angegebenen Bereiche ergeben.

Die Glasübergangstemperatur kann vom Fachmann unter Zuhilfenahme der Formel 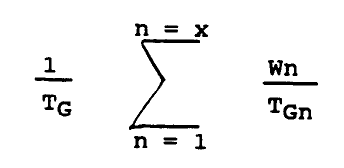
- T_{G} =: Glasübergangstemperatur des Polymeren
- x =: Anzahl der verschiedenen einpolymerisierten Monomere,
- Wₙ =: Gewichtsanteil des n-ten Monomers
- T_{Gn} =: Glasübergangstemperatur des Homopolymers aus dem n-ten Monomer
näherungsweise berechnet werden.

Bevorzugt ist die Komponente (b) ausgewählt aus 3-Hydroxipropylmethacrylat, 3-Hydroxipropylacrylat, 2-Hydroxipropylmethacralat und/oder 2-Hydroxipropylacrylat.

Als weitere hydroxylgruppenhaltige Monomere (Komponente (c)) kommen Hydroxialkylester α,β-ungesättigter Carbonsäuren mit primären oder sekundären Hydroxylgruppen in Frage. Ist eine hohe Reaktivität des Acrylatcopolymerisats erwünscht, können ausschließlich Hydroxialkylester mit primären Hydroxylgruppen eingesetzt werden; soll das Polyacrylat weniger reaktiv sein, können ausschließlich Hydroxialkylester mit sekundären Hydroxylgruppen eingesetzt werden. Selbstverständlich können auch Mischungen von Hydroxialkylestern mit primären Hxydroxylgruppen und Hydroxialkylestern mit sekundären Hydroxylgruppen verwendet werden. Beispiele für geeignete Hydroxialkylester α,β-ungesättigter Carbonsäuren mit primären Hydroxylgruppen sind Hydroxibutylacrylat, Hydroxiamylacrylat, Hydroxihexylacrylat, Hydroxioctylacrylat und die entsprechenden Methacrylate. Als Beipiele für verwendbare Hydroxialkylester mit einer sekundären Hydroxylgruppe seien 2-Hydroxibutylacrylat, 3-Hydroxibutylacrylat und die entsprechenden Methacrylate genannt. Selbstverständlich könnn jeweils auch die entsprechenden Ester anderer α,β-ungesättigter Carbonsäuren, wie z.B. der Crotonsäure und der Isocrotonsäure eingesetzt werden.

Vorteilhaft kann die Komponente (c) zumindest teilweise ein Umsetzungsprodukt aus einem Mol Hydroxiethylacrylat und/oder Hydroxiethylmethacrylat und durchschnittlich zwei Mol ε-Caprolacton sein. Als Komponente (c) kann zumindest teilweise auch ein Umsetzungsprodukt aus Acrylsäure und/oder Methacrylsäure mit der äquivalenten Menge eines Glycidylesters einer Carbonsäure mit einem tertiären α-Kohlenstoffatom eingesetzt werden. Glycidylester stark verzweigter Monocarbonsäuren sind unter dem Handelsnamen 'Cardura' erhältlich. Die Umsetzung der Acrylsäure oder Methacrylsäure mit dem Glycidylester einer Carbonsäure mit einem tertiären α-Kohlenstoffatom kann vor, während oder nach der Polymerisationsreaktion erfolgen.

Die zur Herstellung des erfindungsgemäß eingesetzten Monomeren (d) werden bevorzugt so ausgewählt, daß bei alleiniger Polymerisation der Komponente (d) ein Polyacrylat- und/oder Polymethacrylatharz mit einer Glasübergangstemperatur von -70 bis 120°C erhalten wird.

Beispiele für als Komponente (d) geeignete Monomere sind Methyl(meth)acrylat, Ethyl(meth)acrylat, Butyl-(meth)acrylat, Isopropyl(meth)acrylat, Isobutyl-(meth) acrylat, Pentyl (meth) acrylat, Isoamyl (meth)acrylat, Hexyl(meth)acrylat, 2-Ethylhexyl (meth)acrylat, Furfuryl (meth) acrylat, Octyl(meth) acrylat, 3,5,5-Tri-methylhexyl (meth) acrylat, Decyl(meth)acrylat, Lauryl-(meth) acrylat, Hexadecyl (meth) acrylat, Octadecyl(meth)-acrylat, Stearyl(meth)acrylat und Ethyltriglykol(meth)-acrylat.

Als Komponente (e) geeignet sind vinylaromatische Verbindungen. Vorzugsweise enthält die Komponente (e) 8 bis 9 Kohlenstoffatome je Molekül. Beispiele für geeignete Verbindungen sind Styrol, Vinyltoluole, α-Methylstyrol, Chlorstyrole, o-, m- oder p-Methyl-styrol, 2,5-Dimethylstyrol, p-Methoxistyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Beispiele für als Komponente (f) geeignete Verbindungen sind Alkoxiethylacrylate, Aryloxiethylacrylate und die entsprechenden Methacrylate, wie z. B. Butoxiethyl-(meth)acrylat und Phenoxiethyl(meth)acrylat sowie Methacrylnitril und Acrylnitril sowie Alkylester von anderen ethylenisch ungesättigten Carbonsäuren, wie z.B. Alkylester der Croton- und Isocrotonsäure sowie polymerisierbare Vinylether und Vinylester.

Die erfindungsgemäßen Beschichtungsmittel können ferner ggf. ein oder mehrere weitere hydroxylgruppenhaltige Harze enthalten. Beispielsweise können sie weitere, von dem obenbeschriebenen Acrylatharz (A) verschiedene, hydroxylgruppenhaltige Acrylatharze und/oder Polykondensationsharze (insbesondere Polyesterharz) enthalten.

üblicherweise werden diese weiteren Bindemittel in einer Menge von 0 bis 25 Gew.-%, bevorzugt von 0 bis 20 Gew.-%, jeweils bezogen auf das Gesamtgewicht des Beschichtungsmittels und bezogen auf den Festkörpergehalt des Bindemittels, eingesetzt.

Beispiele für geeignete weitere Bindemittel sind beispielsweise die im Handel unter den Namen Macrynal^{®} SM 510 und SM 513 der Firma Hoechst erhältlichen Polyacrylatharze sowie die in der Deutschen Patentanmeldung DE-A-40 24 204 beschriebenen, in Gegenwart eines Polyesters hergestellten hydroxylgruppenhaltigen Polyacrylatharze. Wegen Einzelheiten sei auf die DE-A-40 24 204, insbesondere die Seite 3, Zeile 18, bis Seite 7, Zeile 53, verwiesen.

Als weiteres Bindemittel geeignet ist beispielsweise auch ein hydroxylgruppenhaltiges Polyacrylatharz, das erhältlich ist, indem
(m1) 10 bis 51 Gew.-% einer Mischung aus
   (m11) einem oder mehreren Monomeren, ausgewählt aus der Gruppe 4-Hydroxi-n-butylacrylat und/oder 4-Hydroxi-n-butylmethacrylat und/oder 3-Hydroxi-n-butylacrylat und/oder 3-Hydroxi-n-butylmethacrylat und
   (m12) einem oder mehreren Monomeren, ausgewählt aus der Gruppe 3-Hydroxi-n-propylacrylat und/oder 3-Hydroxi-n-propylmethacrylat und/oder 2-Hydroxi-n-propylacrylat und/oder 2-Hydroxi-n-propylmethacrylat,
(m2) 0 bis 20 Gew.-% eines von (m1) verschiedenen hydroxylgruppenhaltigen Esters der Acrylsäure oder der Methacrylsäure mit mindestens 5 C-Atomen im Alkoholrest oder eines Gemisches aus solchen Monomeren,
(m3) 28 bis 85 Gew.-% eines von (m1) und (m2) verschiedenen aliphatischen oder cycloaliphatischen Esters der Acrylsäure oder der Methacrylsäure mit mindestens 4 C-Atomen im Alkoholrest oder eines Gemisches aus solchen Monomeren,
(m4) 0 bis 25 Gew.-% eines von (m1), (m2) und (m3) verschiedenen vinylaromatischen Kohlenwasserstoffs oder eines Gemisches aus solchen Monomeren,
(m5) 0 bis 5 Gew.-% einer ethylenisch ungesättigten Carbonsäure oder einer Mischung aus ethylenisch ungesättigten Carbonsäuren und
(m6) 0 bis 20 Gew.-% eines von (m1), (m2), (m3), (m4) und (m5) verschiedenen ethylenisch ungesättigten Monomeren oder eines Gemisches aus solchen Monomeren
zu einem Polyacrylatharz mit einer Hydroxylzahl von 60 bis 200 mgKOH/g, einer Säurezahl von 0 bis 35 mgKOH/g und einem zahlenmittleren Molekulargewicht von 1000 bis 5000 polymerisiert werden, wobei die Summe der Gewichtsanteile der Komponenten (m1) bis (m6) jeweils 100 Gew.-% beträgt.

Beispiele für die als Monomerkomponenten (m1) bis (m6) geeignete Verbindungen sind die bei der Beschreibung des Acrylatharzes (A) aufgeführten Verbindungen.

Bei der Polyisocyanatkomponente (B) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel geeignete Lösemittel für die Polyisocyanate sind beispielsweise Ethoxi-ethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-l-methylcyclohexan, 3-Isocyanatomethyl-3,5,5-trimethylcyclohexyliso-cyanat ("Isophorondiisocyanat"), 2,5- und 3,5-Bis(isocyanatomethyl) -8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethyl-benzol, 1,3- und 1,4-Phenylendiisocyanat, 4,4'-Diiso-cyanato-diphenyl, 4,4'-Diisocyanato-3,3'-dichlordi-phenyl, 4,4'-Diisocyanato-3,3'-dimethoxi-diphenyl, 4,4'-Diisocyanato-3,3'-dimethyl-diphenyl, 4,4'-Diiso-cyanato-3,3'-diphenyl-diphenyl, 2,4'- und 4,4'-Diiso-cyanato-diphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphe-nyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenyl-ether, 4,4',4"-Triisocyanatotriphenylmethan. Bevorzugt werden, ggf. in Kombination mit den obengenannten Polyisocyanaten, Isocyanuratgruppen und/oder Biuretgruppen und/oder Allophanatgruppen und/oder Urethangruppen und/oder Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion-und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Die Menge des eingesetzten Vernetzers wird so gewählt, daß das Verhältnis der Isocyanatgruppen des Vernetzers zu den Hydroxylgruppen der Bindemittelkomponente im Bereich von 1 : 3 bis 3 : 1 liegt. Üblicherweise enthalten die erfindungsgemäßen Beschichtungsmittel 15 bis 45 Gew.-% des Acrylatharzes (A), 0 bis 30 Gew.-% der weiteren Bindemittelkomponente und 6 bis 20 Gew.-% des Vernetzungsmittels (B), jeweils bezogen auf das Gesamtgewicht des Beschichtungsmittels und bezogen auf den Festkörpergehalt der Bindemittel- und Vernetzerkomponenten.

Die erfindungsgemäßen Beschichtungsmittel enthalten ferner ein oder mehrere organische Lösungsmittel. Diese Lösungsmittel werden üblicherweise in Mengen von 20 bis 70 Gew.-%, bevorzugt von 25 bis 65 Gew.-%, jeweils bezogen auf das Gesamtgewicht des Beschichtungsmittels, eingesetzt.
Beispiele für geeignete Lösungsmittel sind höher substituierte Aromaten, wie z.B. Solvent Naphtha^{®}, Schwer-benzol, verschiedene Solvesso^{®}-Typen, verschiedene Shellsol^{®}-Typen und Deasol^{®} sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä..

Die erfindungsgemäßen Beschichtungsmittel können außerdem übliche Hilfs- und Zusatzstoffe in üblichen Mengen, bevorzugt 0,01 bis 10 Gew.-%, bezogen auf das Gesamtgewicht des Beschichtungsmittel, enthalten. Beispiele für geeignete Hilfs- und Zusatzstoffe sind Verlaufsmittel, wie Silikonöle, Weichmacher, wie Phosphorsäureester und Phthalsäureester, viskositätskontrollierende Zusätze, Mattierungsmittel, UV-Absorber, Lichtschutzmittel und ggf. Füllstoffe.

Die Herstellung der Beschichtungsmittel erfolgt in bekannter Weise duch Mischen und ggf. Dispergieren der einzelnen Komponenten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die Aushärtung dieser Beschichtungsmittel erfolgt üblicherweise bei Raumtemperatur oder leicht erhöhter Temperatur, vorteilhafterweise bei Temperaturen unterhalb von 100°C, bevorzugt bei Temperaturen unterhalb von 80°C. Die Beschichtungsmittel können aber auch unter Einbrennbedingungen, d.h. bei Temperaturen von mindestens 100°C, gehärtet werden.
Als Substrate eignen sich insbesondere Metalle sowie Holz, Kunststoff, Glas u.ä..
Aufgrund der kurzen Härtungszeiten und niedrigen Härtungstemperaturen werden die erfindungsgemäßen Beschichtungsmittel bevorzugt für die Autoreparaturlackierung, die Lackierung von Großfahrzeugen und LKW-Aufbauten verwendet. Sie können aber - je nach eingesetztem Vernetzer - auch für die Automobilserienlackierung eingesetzt werden.
Des weiteren eignen sie sich insbesondere als Klarlack.

Gegenstand der vorliegenden Erfindung ist daher auch ein Verfahren zur Herstellung eines mehrschichtigen schützenden und/oder dekorativen Überzuges auf einer Substratoberfläche, bei dem
(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack, der
   (A) ein hydroxylgruppenhaltiges Polyacrylatharz und
   (B) ein Vernetzungsmittel
   enthält, aufgebracht wird und anschließend
(4) Basislackschicht und Decklackschicht zusammen gehärtet werden,
dadurch gekennzeichnet, daß als Decklack das erfindungsgemäße Beschichtungsmittel eingesetzt wird.

Die in diesem Verfahren eingesetzten Basislacke sind bekannt und brauchen daher nicht näher erläutert zu werden. Beispiele für geeignete Basislacke sind auch die in der DE-OS 41 10 520, der DE-OS 40 09 000, der DE-OS 40 24 204, der EP-A-355 433, der DE-OS 35 45 618, der DE-OS 38 13 866 und der nicht vorveröffentlichten deutschen Patentanmeldung P 42 32 717.2 beschriebenen Basislacke.

Geeignet sind außerdem die in der noch nicht veröffentlichten deutschen Patentanmeldung P 43 27 416.1 beschriebenen Basislacke, die dadurch gekennzeichnet sind, daß sie einen hydroxylgruppenhaltigen Polyester mit einem gewichtsmittleren Molekulargewicht Mw von 40.000 - 200.000 und eine Uneinheitlichkeit Mw/Mn > 8 enthalten und daß zur Herstellung des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei die Gew.-%-Angaben jeweils auf das Gesamtgewicht der zur Herstellung des Polyesters eingesetzten Säurekomponenten bezogen sind.

Die erfindungsgemäßen Beschichtungsmittel zeichnen sich insbesondere durch eine gute Haftung auf der Basislackschicht, eine gute Kratzfestigkeit und hohe Härte der resultierenden Beschichtungen aus. Daneben weisen die Beschichtungsmittel eine schnelle Trocknung bei gleichzeitig langer Verarbeitbarkeit (Topfzeit) aus. Weiterhin zeigen die resultierenden Beschichtungen, insbesondere im Fall der Klarlackbeschichtungen, gute mechanische Eigenschaften, wie beispielsweise eine gute Glanzhaltung, eine gute Fülle und einen guten Verlauf.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### I. Herstellung der hydroxylgruppenhaltigen Acrylatharze E1 bis E4 und V1 bis V4 (Vergleichsbeispiele)

Die zur Herstellung der hydroxylgruppenhaltigen Acrylatharze E1 bis E4 (erfindungsgemäß) und V1 bis V4 (Vergleich) eingesetzten Monomeren sind in Tabelle 1 angegeben. Als Hydroxi-n-propyl(meth)acrylat wurde dabei eine handelsübliche Mischung aus 25 Gew.-% 3-Hy-droxi-n-propyl(meth)acrylat und 75 Gew.-% 2-Hydroxi-n-propyl(meth)acrylat eingesetzt. Die Herstellung der Acrylatharze erfolgt, indem in einem für Polymerisationsreaktionen geeigneten 4 1 Reaktor 34,27 % Shellsol®A, bezogen auf die Masse von 100 % der Monomerenmischung, vorgelegt und auf 145°C erwärmt wurden. Zu dieser Vorlage dosierte man gleichzeitig beginnend und gleichmäßig innerhalb von 4 Stunden eine Mischung aus 100 % der Monomeren und 0,5 % Mercaptoethanol, bezogen auf die Masse von 100 % der Monomerenmischung, sowie in 4,5 Stunden 11,9 % der Initiatorlösung, bezogen auf die Masse von 100 % der Monomerenmischung, bestehend aus einer 18,3 %igen Lösung von tert.-Butylcymolhydroperoxid in Xylol. Nach 2 Stunden Nachpolymerisation wurde mit 98 %igem Butylacetat auf einen Festkörper von 60,4 - 63,4 % eingestellt.

Die Eigenschaften der resultierenden Acrylatharze sind in Tabelle 2 dargestellt.

### II. Herstellung der Beschichtungsmittel E1 bis E4 der Beispiele 1 bis 4 und der Beschichtungsmittel V1 bis V4 der Vergleichsbeispiele 1 bis 4

### II.1. Herstellung einer Härterlösung

Aus den nachfolgend angegebenen Komponenten wird durch Mischen eine Härterlösung hergestellt:

| | |
|---|---|
| Butylacetat 98% | 40,5 Teile |
| Xylol | 4,0 Teile |
| Butylglykolacetat | 6,0 Teile |
| Katalysatorlösung | 1,5 Teile |
| Desmodur® Z 4370¹⁾ | 15,0 Teile |
| Desmodur® N 3390²⁾ | 33,0 Teile |
| Festkörper (Gew.%) | 42,2 Teile |

1) Handelsübliches Polyisocyanat der Firma Bayer AG auf Basis Isophorondiisocyanat mit einem Festkörpergehalt von 70 % und einem NCO-Gehalt von 11 %.
2) Handelsübliches Polyisocyanat der Firma Bayer AG auf Basis eines Hexamethylendiisocyanattrimerisates mit einer mittleren Funktionalität zwischen 3 und 4 und einem Uretdiongruppengehalt zwischen 0 und 3 Gew.-% sowie einem Festkörpergehalt von 90 % und einem Isocyanatgehalt von 19,5 %.

### II.2. Herstellung eines Einstellzusatzes

Aus den nachfolgend angegebenen Komponenten wird durch Mischen ein Einstellzusatz hergestellt:

| | |
|---|---|
| Xylol | 20,0 Teile |
| Solventnaphta® | 15,0 Teile |
| Benzin 135/180 | 10,0 Teile |
| Butylgykolacetat | 5,0 Teile |
| Butylacetat (98/100) | 50,0 Teile |

### II.3. Herstellung einer Katalysatorlösung

1,0 Teile Dibutylzinndilaurat werden mit 99,0 Teilen Butylacetat 98/100 gemischt.

### II.4. Herstellung einer Verlaufsmittellösung

5,0 Teile eines handelsüblichen Verlaufsmittels auf Basis eines polyethermodifizierten Methylpolysiloxans (Handelsprodukt Baysilone® OL 44 der Bayer AG) und 95,0 Teile Xylol werden gemischt.

### II.5. Herstellung der Klarlacklösungen E1 bis E4 und V1 bis V4

Aus den in Tabelle 3 angegebenen Komponenten werden die Klarlacklösungen durch Vermischen hergestellt.

### II.6. Herstellung der transparenten Decklacke E1 bis E4 und V1 bis V4 (Vergleichsbeispiele)

Die transparenten Decklacke werden dadurch hergestellt, daß jeweils 100 Volumenteile der Klarlacklösungen E1 bis E4 bzw. V1 bis V4 mit 50 Volumenteilen der obenbeschriebenen Härterlösung und 10 Volumenteilen des obenbeschriebenen Einstellzusatzes gemischt werden.

Der so erhaltene Lack wird dann auf phosphatierte und beschichtete Stahlbleche appliziert. Die phosphatierten Stahlbleche werden hierzu mit einem handelsüblichen konventionellen Füller (Handelsprodukt Glasurit Grundfüller EP 801-1552 der Firma Glasurit GmbH, Münster, mit einem epoxifunktionellen Bindemittel und einem aminofunktionellen Härter) mittels Spritzauftrag beschichtet (Trockenfilmschichtdicke ca. 40 bis 60 µm), 45 min bei 80°C und 16 h bei Raumtemperatur getrocknet und mit Schleifpapier P800 und Excenterschleifer naß geschliffen. Anschließend wird ein Basislack aus einer Mischung aus 80 Teilen eines handelsüblichen konventionellen Metallic-Basislackes (Handelsprodukt Basislack AE 54M 99/9 Basisfarbe Aluminium superfein der Firma Glasurit GmbH, Münster) auf Basis eines hydroxylgruppenhaltigen Polyesters, Celluloseacetobutyrat, Wachs und eines Melaminharzes und 20 Teilen eines weiteren handelsüblichen konventionellen Basislackes (Handelsprodukt Basislack AE 54M 552 Basisfarbe Helioblau der Firma Glasurit GmbH, Münster) auf Basis eines hydroxylgruppenhaltigen Polyesters, Celluloseacetobutyrat, Wachs und eines Melaminharzes aufgebracht, indem zunächst ein Spritzgang aufgetragen wird und nach einer Zwischenablüftzeit von 5 min ein zweiter Spritzgang aufgebracht wird (Spritzdruck jeweils 4 - 5 bar). Die Trockenfilmschichtdicke des Basislackes beträgt ca. 20 µm. Nach einer Ablüftzeit von 30 min. wird der Klarlack appliziert, indem zunächst ein Spritzgang aufgetragen wird und nach einer Zwischenablüftzeit von 3 min ein zweiter Spritzgang aufgebracht wird (Spritzdruck jeweils 4 - 5 bar). Die Tafeln werden dann je nach durchgeführter Prüfung unter verschiedenen Bedingungen getrocknet. Die Trockenfilmschichtdicke des Klarlackes beträgt ca. 50 - 80 µm.

Die Ergebnisse der Prüfung der resultierenden Beschichtungen sind in der Tabelle 4 dargestellt.

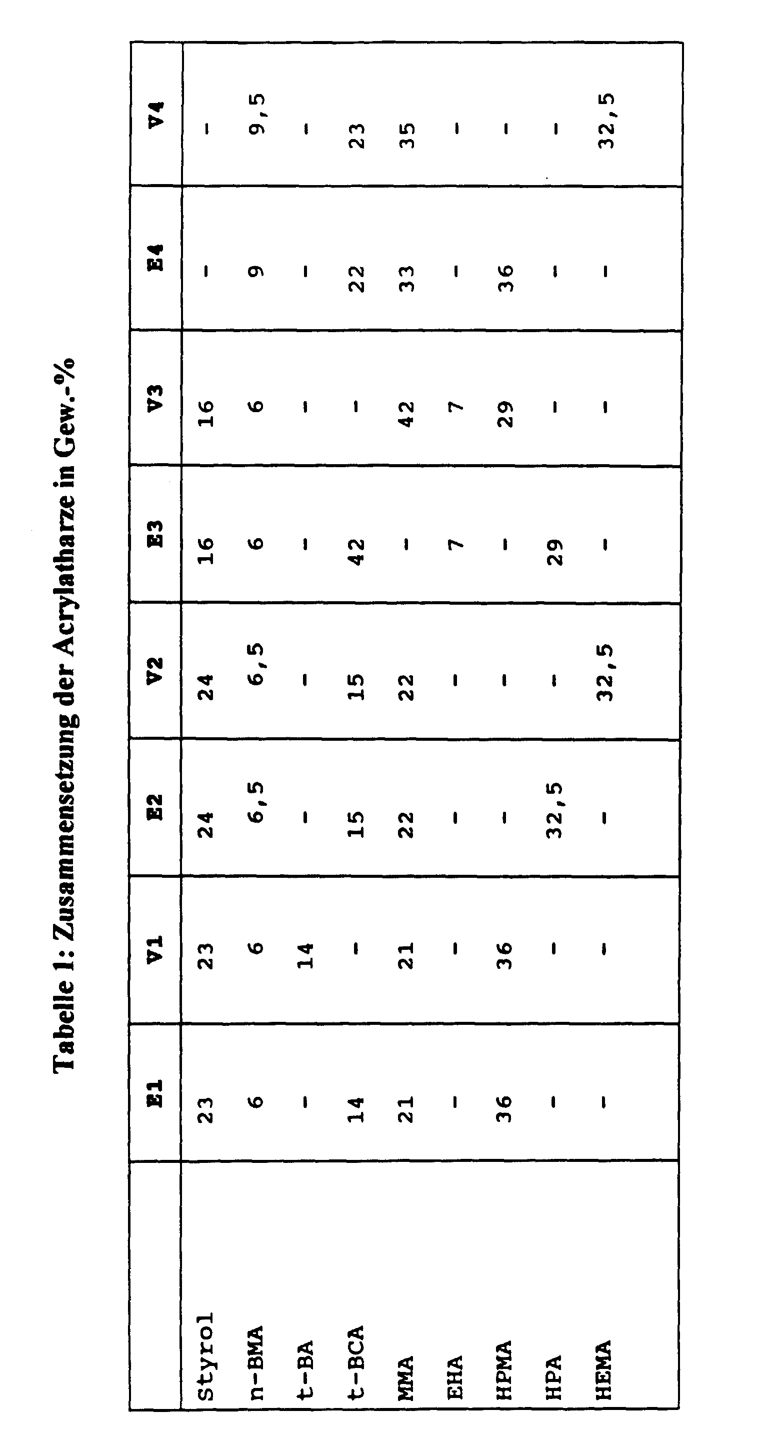

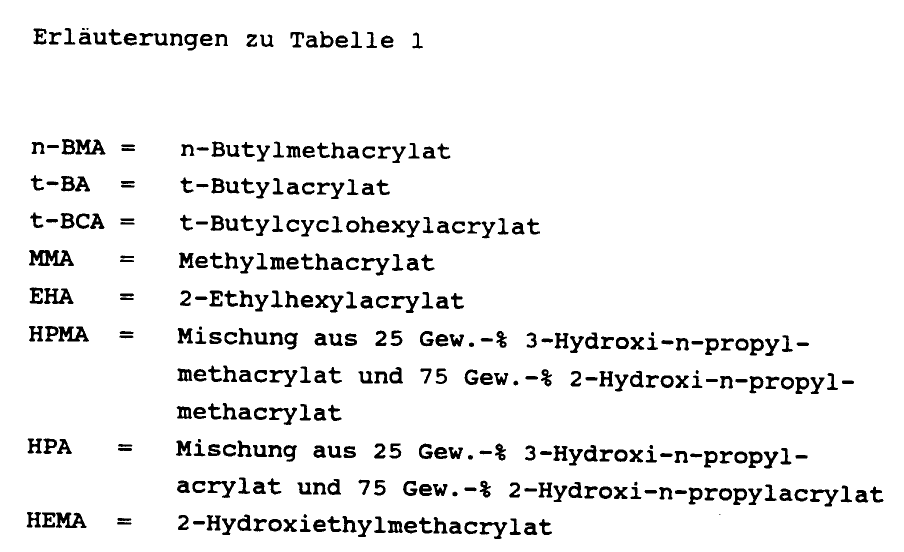

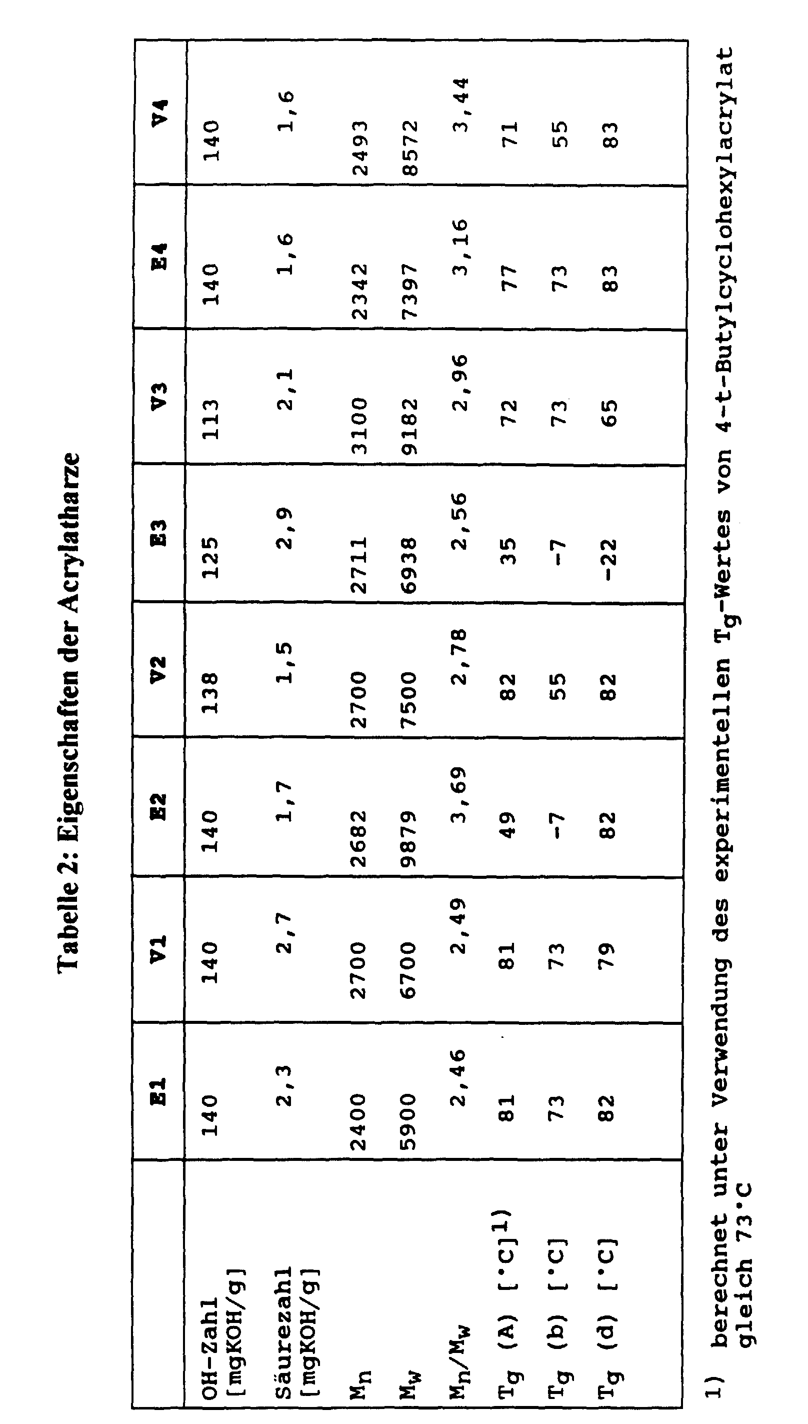

**Tabelle 3:**

| Zusammensetzung der Klarlacklösungen in Gewichtsteilen | | | | | | | | |
|---|---|---|---|---|---|---|---|---|
| | KE1 | KV1 | KE2 | KV2 | KE3 | KV3 | KE4 | KV4 |
| AE1¹⁾ | 87,- | - | - | - | - | - | - | - |
| AV1¹⁾ | - | 87,- | | - | - | - | - | - |
| AE2¹⁾ | - | - | 87,- | - | - | - | - | - |
| AV2¹⁾ | - | - | - | 87,- | - | - | - | - |
| AE3¹⁾ | - | - | - | - | 87,- | - | - | - |
| AV3¹⁾ | - | - | - | - | - | 87,- | - | - |
| AE4¹⁾ | - | - | - | - | - | - | 87,- | - |
| AV4¹⁾ | - | - | - | - | - | - | - | 87,- |
| LS1²⁾ | 0,9 | 0,9 | 0,9 | 0,9 | 0,9 | 0,9 | 0,9 | 0,9 |
| LS2³⁾ | 0,9 | 0,9 | 0,9 | 0,9 | 0,9 | 0,9 | 0,9 | 0,9 |
| DBTL⁴⁾ | 2,0 | 2,0 | 2,0 | 2,0 | 2,0 | 2,0 | 2,0 | 2,0 |
| VLM⁵⁾ | 3,8 | 3,8 | 3,8 | 3,8 | 3,8 | 3,8 | 3,8 | 3,8 |
| BGA⁶⁾ | 2,4 | 2,4 | 2,4 | 2,4 | 2,4 | 2,4 | 2,4 | 2,4 |
| BA⁷⁾ | 3,0 | 3,0 | 3,0 | 3,0 | 3,0 | 3,0 | 3,0 | 3,0 |
| FK(%)⁸⁾ | 52,2 | 52,2 | 52,2 | 52,2 | 52,2 | 52,2 | 52,2 | 52,2 |
| Erläuterungen zu Tabelle 3 | | | | | | | | |

| | | | | | | | | |
|---|---|---|---|---|---|---|---|---|
| 1) in Tabelle 1 beschriebene Acrylatharzlösungen E1 bis E4 und V1 bis V4, die aber alle mit Butylacetat einheitlich auf einen Festkörpergehalt von 58 % eingestellt wurden | | | | | | | | |
| 2) Tinuvin®292 der Firma Ciba Geigy, handelsübliches Lichtschutzmittel auf Basis eines sterisch gehinderten Amins (HALS) | | | | | | | | |
| 3) Tinuvin®1130 der Firma Ciba Geigy, handeslübliches Lichtschutzmittel auf Basis Benztriazol | | | | | | | | |
| 4) Unter Punkt II.3. beschriebene Katalysatorlösung | | | | | | | | |
| 5) Unter Punkt II.4. beschriebene Verlaufsmittellösung | | | | | | | | |
| 6) Butylglykolacetat | | | | | | | | |
| 7) Butylacetat 98 %ig | | | | | | | | |
| 8) Festkörper | | | | | | | | |

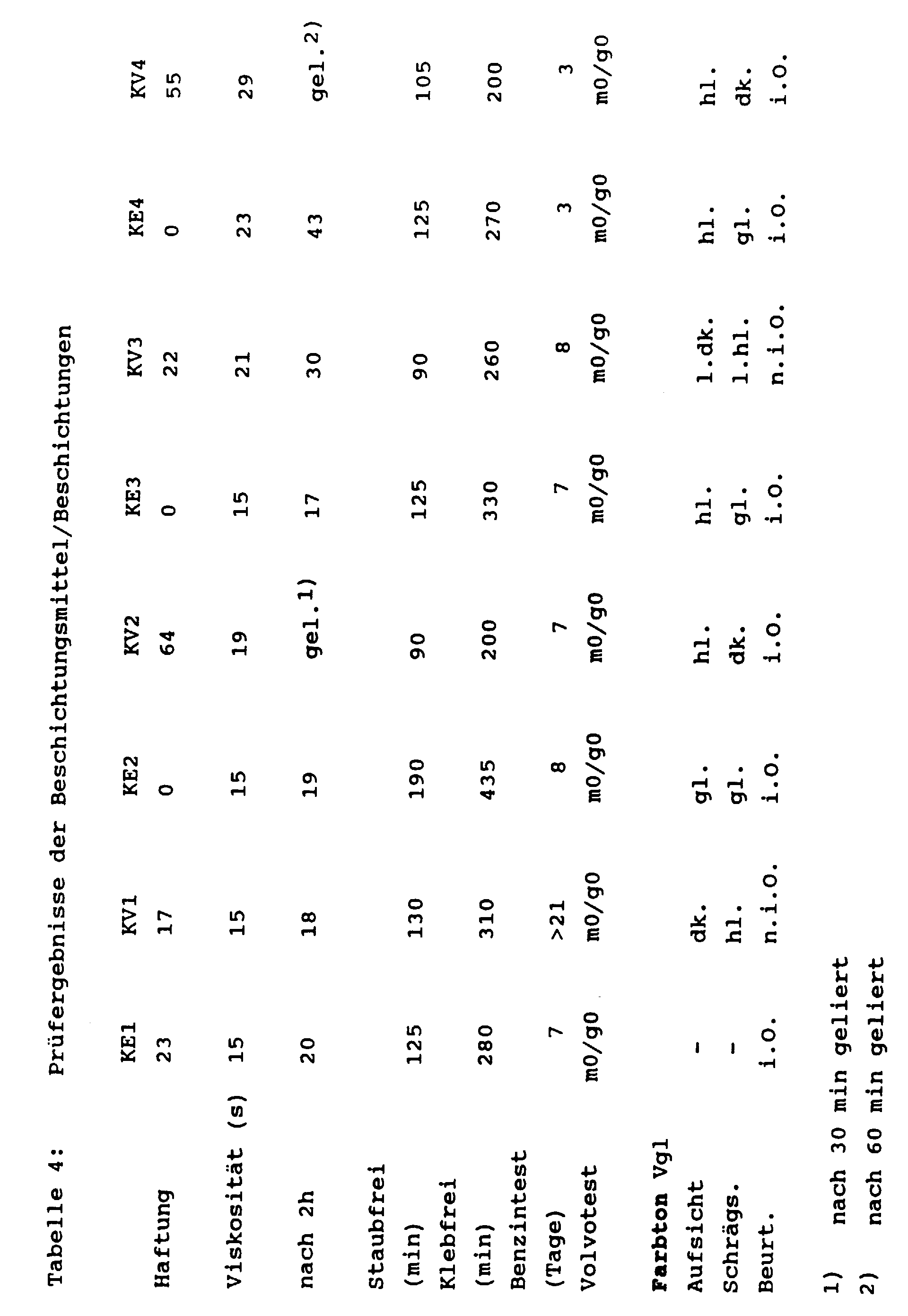

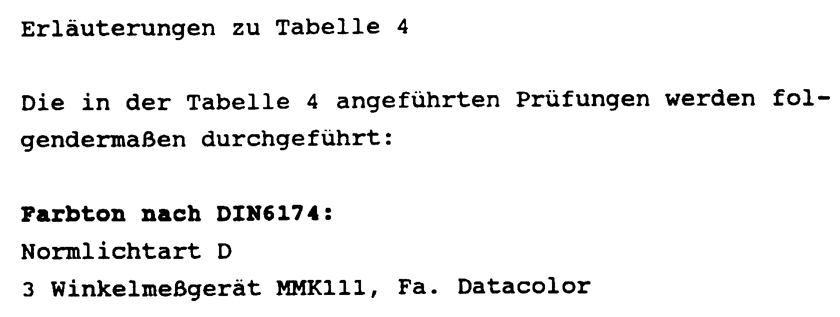

Als Basisfarbe wurde eine Mischung der handelsüblichen Basisfarben der Fa. BASF L+F, (Münster-Hiltrup, Deutschland) der Reihe 54 verwandt. Zum Einsatz kam eine Mischung von 80 Gew. Teilen 54M 99/9 Basisfarbe Aluminium superfein und 20 Gew. Teilen 54M 552 Basisfarbe Helioblau. Der Testlack wird auf ein 40x60cm Stahlblech wie unter Punkt II.6. beschrieben appliziert und 30 min bei 60°C getrocknet. Nach 24 h Lagerung bei Raumtemperatur wird die Farbtonprüfung durchgeführt. Die Tafeln werden unter einer Neonlampe Osram Universal weiß ausgewertet:
1. Aufsicht: Die Tafeln werden im Winkel von ca. 20° zur Senkrechten mit der Standardtafel (beschichtet mit dem erfindungsgemäßen Klarlack des Beispiels 1) verglichen.
2. Schrägsicht: Die Tafeln werden im Winkel von ca. 70° zur Senkrechten mit der Standardtafel (beschichtet mit dem erfindungsgemäßen Klarlack des Beispiels 1) verglichen.

### Bewertung:

Der Hell/Dunkelwechsel zwischen Aufsicht und Schrägsicht sollte möglichst ausgeprägt sein. Die Aufsicht ist in Ordnung, wenn die Tafel mit dem Testklarlack die gleiche oder eine größere Helligkeit wie die Standardtafel aufweist. Die Schrägsicht ist in Ordnung, wenn die Tafel mit dem Testlack die gleiche oder eine geringere Helligkeit wie die Standardtafel aufweist.

**Haftungsprüfung mit dem Hochdruckreiniger:**
Hochdruckreiniger
80 bar Druck
Durchlaufmenge 800l/h
Temperatur:Kalt
Abstand der Düse zur Testtafel:5cm
Der Testlack wird auf ein 40x60cm Stahlblech wie unter Punkt II.6. beschrieben appliziert und 30 min bei 60°C getrocknet. Nach 7 Tagen Lagerung bei Raumtemperatur wird mit einem Messer ein Dreieck mit 10 cm Seitenlänge durch die Lackschichten geschnitten. Der Schnitt muß bis zum Substrat erfolgen. Anschließend werden die Seiten des Dreiecks mit dem Hochdruckreinigerstrahl jeweils 10 s belastet.
Auswertung: Über das Dreieck wird ein quadratisch geschittenes Metallgitter mit 1/2 Zoll (1,3 cm) Maschenweite und insgesamt 6 Zoll (15,4 cm) Kantenlänge gelegt (144 Quadrate). Jedes Quadrat, in dem ein Haftungsverlust zwischen Klarlack und Basislack vorkommt, wird gezählt.

### Staubfreiheit:

Ca. 15 Minuten nach dem Aufspritzen des Lackes wird die Tafel an einer Ecke mit einer kleinen Probe Seesand (3 - 4 g) bestreut. Die Tafel wird dann aus einer Höhe von 30 cm mit der Kante aufgestoßen (freier Fall). Staubfreiheit ist erreicht, wenn keine Sandanhaftung vorliegt. Die Prüfung wird nach jeweils 15 Minuten wiederholt, kurz vor Erreichen der Staubfreiheit wird das Wiederholungsintervall auf 5 Minuten verkürzt.

### Klebfreiheit:

Ca. 20 Minuten nach Erreichen der Staubfreiheit wird die lackierte Tafel mit einem ca. 3cm² Blättchen Papier belegt. Auf dieses Papier wird eine kleine Platte aus Hartkunstoff gelegt, auf das dann ein Gewicht von 100g aufgelegt wird. Nach genau 1 Minute wird wie beim Test auf Staubfreiheit geprüft, ob das Papier noch anhaftet. Die Prüfung wird nach jeweils 15 Minuten wiederholt, kurz vor Erreichen der Klebfreiheit wird das Wiederholungsintervall auf 5 Minuten verkürzt

### Benzinfestigkeit:

Wie oben beschrieben, wird der Klarlack auf phosphatierte, beschichtete Stahlbleche, die mit dem obenbeschriebenen Füller und Basislack beschichtet sind, appliziert und bei Raumtemperatur getrocknet. Nach 24stündiger Lagerung bei Raumtemperatur wird erstmals die Benzinfestigkeit geprüft.
Durchführung: Ein mit 1 ml Superbenzin (bleifrei) getränktes Wattepad (Filtergrad, Typ T950, Größe 2,3 der Firma Seitz), das auf der Unterseite eine gitterförmige Struktur besitzt, wird auf die Lackschicht gelegt und mit einem 100 g Gewicht 5 Minuten belastet. Danach wird die durch die Anquellung der Lackoberfläche hervorgerufene Struktur visuell beurteilt: nicht markiert, markiert, sehr leicht markiert, leicht markiert, markiert, stark markiert, sehr stark markiert. Angegeben ist die Zeitdauer der Lagerung bei Raumtemperatur in Tagen, nach denen der Benzintest in Ordnung ist, d.h. keine Markierung sichtbar ist.

### Viskosität:

Die Viskosität wird jeweils als Auslaufzeit im DIN 4-Becher bei 20°C gemessen.

### Volvo Crack Test:

Prüfbedingungen 1 Cyclus:
4h bei 50 °C im Ofen
2h bei 35 °C und 95-100 % rel. Luftfeuchte
2h bei 35 °C und 95-100 % rel. Luftfeuchte und 21 Schwefeldioxid
16h bei -30 °C im Tiefkühlschrank
Tafel mit Wasser waschen und trocknen
Auswertung:
Blasengrad nach DIN 53209
Risse ASTM D660

### III. Zusammenfassung der Prüfergebnisse

Der Klarlack E1 des Beispiels 1 zeigt eine ausreichende Haftung bei guter Trocknung und guter Topfzeit. Der Hell/Dunkelwechsel des Basislacks ist gut. Demgegenüber zeigt der Klarlack V1 des Vergleichsbeispiels 1 eine schlechtere Trocknung, schlechtere Benzinfestigkeit und eine leichte Anlösung des Basislacks. Der Hell/Dunkelwechsel ist nicht mehr ausreichend.

Der Klarlack E2 des Beispiels 2 zeigt gegenüber dem Klarlack des Beispiels 1 eine deutlich bessere Haftung. Der Hell/Dunkelwechsel des Basislacks ist gut. Die Trocknung ist allerdings langsamer als die der Klarlacke des Beispiels 1 und des Vergleichsbeispiels V1.

Der Klarlack des Vergleichsbeispiels V2 ist in der Haftung und Topfzeit nicht ausreichend. Der Hell/Dunkelwechsel des Basislacks ist hier besser als der des Beispiels 1.

Der Klarlack des Beispiels 3 zeigt gegenüber dem Klarlack des Beispiels 1 eine deutlich bessere Haftung. Der Hell/Dunkelwechsel des Basislacks ist gut. Die Trocknung ist allerdings langsamer als die der Klarlacke des Beispiels 1 und des Vergleichsbeispiels V1.

Der Klarlack des Vergleichsbeispiels V3 zeigt ausreichende Haftung bei verkürzter Topfzeit. Der Hell/Dunkelwechsel des Basislacks ist nicht ausreichend.

Der Klarlack des Beispiels 4 zeigt eine stark verkürzte Topfzeit. Der Hell/Dunkelwechsel ist gut und die Haftung ist deutlich besser als die des Klarlacks des Beispiels 1.

Der Klarlack des Vergleichsbeispiels V4 zeigt eine sehr schlechte Haftung bei kurzer Topfzeit. Der Hell/Dunkelwechsel des Basislacks ist gut.

## Patentansprüche

1. Beschichtungsmittel, enthaltend
(A) mindestens ein hydroxylgruppenhaltiges Polyacrylatharz, das erhältlich ist aus
(a) einem cycloaliphatischen Ester der Methacrylsäure und/oder Acrylsäure oder einem Gemisch aus solchen Monomeren,
(b) einem hydroxylgruppenhaltigen Alkylester der Methacrylsäure und/oder Acrylsäure oder Gemischen aus solchen Monomeren,
(c) ggf. einem von (a) und (b) verschiedenen hydroxylgruppenhaltigen, ethylenisch ungesättigten Monomeren oder einem Gemisch aus solchen Monomeren,
(d) einem von (a), (b) und (c) verschiedenen aliphatischen Ester der Methacryl-und/oder Acrylsäure oder einem Gemisch aus solchen Monomeren,
(e) ggf. einem von (a), (b), (c) und (d) verschiedenen vinylaromatischen Kohlenwasserstoff oder einem Gemisch aus solchen Monomeren und
(f) ggf. eines von (a), (b), (c), (d) und (e) verschiedenen weiteren ethylenisch ungesättigten Monomeren oder einem Gemisch aus solchen Monomeren,
und
(B) mindestens ein Vernetzungsmittel,
dadurch gekennzeichnet, daß die Komponente (A) ein hydroxylgruppenhaltiges Polyacrylatharz ist, das erhältlich ist, indem
(a) 5 bis 80 Gew.-% der Komponente (a),
(b) 10 bis 50 Gew.-% der Komponente (b),
(c) 0 bis 25 Gew.-% der Komponente (c),
(d) 5 bis 80 Gew.-% der Komponente (d),
(e) 0 bis 40 Gew.-% der Komponente (e) und
(f) 0 bis 40 Gew.-% der Komponente (f)
zu einem Polyacrylatharz mit einem zahlenmittleren Molekulargewicht Mn von 1000 bis 5000, einem Verhältnis von gewichtsmittlerem Molekulargewicht Mw zu zahlenmittlerem Molekulargewicht Mn von weniger als 5,0 und einer OH-Zahl von 60 bis 180 mg KOH/g polymerisiert werden, wobei die Summe der Gewichtsanteile der Komponenten (a) bis (f) stets 100 Gew.-% beträgt und wobei als Komponente (b) nur Monomere oder Mischungen von Monomeren eingesetzt werden, die bei alleiniger Polymerisation des jeweiligen Monomers ein Polyacrylat- und/oder Polymethacrylatharz mit einer Glasübergangs-temperatur von -10°C bis +6°C oder von +60°C bis 80°C ergeben.

2. Beschichtungsmittel nach Anspruch 1, dadurch gekennzeichnet, daß die Komponente (b) ausgewählt ist aus 3-Hydroxipropylmethacrylat, 3-Hydroxipropylacrylat, 2-Hydroxipropylmethacralat und/oder 2-Hydroxipropylacrylat.

3. Beschichtungsmittel nach Anspruch 1 oder 2, dadurch gekennzeichnet, daß die Komponente (d) so ausgewählt wird, daß bei alleiniger Polymerisation der Komponente (d) ein Polyacrylat- und/oder Polymethacrylatharz mit einer Glasübergangstemperatur von -70°C bis +120°C erhalten wird.

4. Beschichtungsmittel nach einem der Ansprüche 1 bis 3, dadurch gekennzeichnet, daß die Komponente (d) ausgewählt ist aus n-Butylmethacrylat, n-Butyl-acrylat, t-Butylmethacrylat, t-Butylacrylat, 1-Butylmethacrylat, i-Butylacrylat, Methylmethacrylat, Methylacrylat, 2-Ethylhexylmethacrylat, 2-Ethylhexylacrylat, Laurylmethacrylat, Laurylacrylat, Stearylmethacrylat, Stearylacrylat, Ethyltriglykolmethacrylat, Furfurylmethacrylat und Furfuryl-acrylat.

5. Beschichtungsmittel nach einem der Ansprüche 1 bis 4, dadurch gekennzeichnet, daß die Komponente (a) ausgewählt ist aus Cyclohexylmethacrylat, Cyclohexylacrylat, Isobornylmethacrylat, Isobornylacrylat, 4-t-Butylcyclohexylacrylat und/oder 4-Butylcyclohexylmethacrylat und bevorzugt ausgewählt ist aus 4-t-Butylcyclohexylacrylat und/oder 4-Butylcyclohexylmethacrylat.

6. Beschichtungsmittel nach einem der Ansprüche 1 bis 5, dadurch gekennzeichnet, daß das Acrylatharz erhältlich ist aus
(a) 5 bis 30 Gew.-% der Komponente (a),
(b) 15 bis 40 Gew.-% der Komponente (b),
(c) 0 bis 15 Gew.-% der Komponente (c),
(d) 5 bis 30 Gew.-% der Komponente (d),
(e) 10 bis 30 Gew.-% der Komponente (e) und
(f) 0 bis 30 Gew.-% der Komponente (f),
wobei die Summe der Gewichtsanteile der Komponenten (a) bis (f) stets 100 Gew.-% beträgt.

7. Beschichtungsmittel nach einem der Ansprüche 1 bis 6, dadurch gekennzeichnet, daß das Polyacrylatharz ein zahlenmittleres Molekulargewicht Mn von 1800 bis 4000, ein Verhältnis von gewichtsmittlerem Molekulargewicht Mw zu zahlenmittlerem Molekularge-wicht Mn von 1,8 bis 4,0 und eine OH-Zahl von 80 bis 160 mg KOH/g, bevorzugt von 100 bis 150 mg KOH/g, aufweist.

8. Beschichtungsmittel nach einem der Ansprüche 1 bis 7, dadurch gekennzeichnet, daß das Beschichtungsmittel als Vernetzungsmittel (B) mindestens ein Di- und/oder Polyisocyanat, bevorzugt mindestens ein isocyanuratgruppenhaltiges Di- und/oder Polyisocyanat, enthält.

9. Beschichtungsmittel nach einem der Ansprüche 1 bis 8, dadurch gekennzeichnet, daß es mindestens ein weiteres, von dem Acrylatharz (A) verschiedenes Bindemittel, bevorzugt mindestens ein von (A) verschiedenes weiteres Polyacrylatharz und/oder mindestens ein Polykondensationsharz enthält.

10. Verfahren zur Herstellung eines mehrschichtigen schützenden und/oder dekorativen Überzuges auf einer Substratoberfläche, bei dem
(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack aufgebracht wird, der
(A) ein hydroxylgruppenhaltiges Polyacrylatharz und
(B) ein Vernetzungsmittel
enthält, aufgebracht wird und anschließend
(4) Basislackschicht und Decklackschicht zusammen gehärtet werden,
dadurch gekennzeichnet, daß als Decklack ein Beschichtungsmittel nach einem der Ansprüche 1 bis 9 eingesetzt wird.

11. Verwendung der Beschichtungsmittel nach einem der Ansprüche 1 bis 9 im Bereich der Autoreparaturlackierung, insbesondere als Decklack.

## Claims

1. Coating composition comprising
(A) at least one hydroxyl group-containing polyacrylate resin which is obtainable from
(a) a cycloaliphatic ester of methacrylic acid and/or acrylic acid, or a mixture of such monomers,
(b) a hydroxyl group-containing alkyl ester of methacrylic acid and/or acrylic acid, or mixtures of such monomers,
(c) optionally a hydroxyl group-containing, ethylenically unsaturated monomer which is different from (a) and (b), or a mixture of such monomers,
(d) an aliphatic ester of methacrylic and/or acrylic acid which is different from (a), (b) and (c), or a mixture of such monomers,
(e) optionally an aromatic vinyl hydrocarbon which is different from (a), (b), (c) and (d), or a mixture of such monomers,
and
(f) optionally of [sic] a further ethylenically unsaturated monomer which is different from (a), (b), (c), (d) and (e), or a mixture of such monomers,
and
(B) at least one crosslinking agent,
characterized in that component (A) is a hydroxyl group-containing polyacrylate resin which is obtainable by polymerizing
(a) from 5 to 80% by weight of component (a),
(b) from 10 to 50% by weight of component (b),
(c) from 0 to 25% by weight of component (c),
(d) from 5 to 80% by weight of component (d),
(e) from 0 to 40% by weight of component (e), and
(f) from 0 to 40% by weight of component (f)
to give a polyacrylate resin having a number-average molecular weight Mn of from 1000 to 5000, a ratio of the weight-average molecular weight Mw to the number-average molecular weight Mn of less than 5.0 and an OH number of from 60 to 180 mg of KOH/g, the sum of the proportions by weight of components (a) to (f) always being 100% by weight and the monomers or monomer mixtures employed as component (b) only being those which, on polymerization of the respective monomer alone, produce a polyacrylate and/or polymethacrylate resin having a glass transition temperature of from -10°C to +6°C or from +60°C to 80°C.

2. Coating composition according to Claim 1, characterized in that component (b) is selected from 3-hydroxypropyl methacrylate, 3-hydroxypropyl acrylate, 2-hydroxypropyl methacralate [sic] and/or 2-hydroxypropyl acrylate.

3. Coating composition according to Claim 1 or 2, characterized in that component (d) is chosen such that the polymerization of the component (d) alone produces a polyacrylate and/or polymethacrylate resin having a glass transition temperature of from -70°C to +120°C.

4. Coating composition according to one of Claims ¹ to 3, characterized in that component (d) is selected from n-butyl methacrylate, n-butyl acrylate, t-butyl methacrylate, t-butyl acrylate, isobutyl methacrylate, isobutyl acrylate, methyl methacrylate, methyl acrylate, 2-ethylhexyl methacrylate, 2-ethylhexyl acrylate, lauryl methacrylate, lauryl acrylate, stearyl methacrylate, stearyl acrylate, ethyltriglycol methacrylate, furfuryl methacrylate and furfuryl acrylate.

5. Coating composition according to one of Claims 1 to 4, characterized in that component (a) is selected from cyclohexyl methacrylate, cyclohexyl acrylate, isobornyl methacrylate, isobornyl acrylate, 4-t-butylcyclohexyl acrylate and/or 4-butylcyclohexyl methacrylate and is preferably selected from 4-t-butylcyclohexyl acrylate and/or 4-butylcyclohexyl methacrylate.

6. Coating composition according to one of Claims 1 to 5, characterized in that the acrylate resin is obtainable from
(a) from 5 to 30% by weight of component (a),
(b) from 15 to 40% by weight of component (b),
(c) from 0 to 15% by weight of component (c),
(d) from 5 to 30% by weight of component (d),
(e) from 10 to 30% by weight of component (e), and
(f) from 0 to 30% by weight of component (f),
the sum of the proportions by weight of components (a) to (f) always being 100% by weight.

7. Coating composition according to one of Claims 1 to 6, characterized in that the polyacrylate resin has a number-average molecular weight Mn of from 1800 to 4000, a ratio of the weight-average molecular weight Mw to the number-average molecular weight Mn of from 1.8 to 4.0 and an OH number of from 80 to 160 mg of KOH/g, preferably from 100 to 150 mg of KOH/g.

8. Coating composition according to one of Claims 1 to 7, characterized in that the coating composition contains as crosslinking agent (B) at least one di- and/or polyisocyanate, preferably at least one di- and/or polyisocyanate which contains isocyanurate groups.

9. Coating composition according to one of Claims 1 to 8, characterized in that it contains at least one other binder which is different from the acrylate resin (A), preferably at least one other polyacrylate resin which is different from (A), and/or at least one polycondensation resin.

10. Process for producing a multilayer protective and/or decorative coating on a substrate surface, in which
(1) a pigmented basecoat is applied to the substrate surface
(2) a polymer film is formed from the basecoat applied in step (1),
(3) a transparent topcoat containing
(A) a hydroxyl group-containing polyacrylate resin and
(B) a crosslinking agent
is applied to the resulting basecoat, and subsequently
(4) basecoat and topcoat are cured together,
characterized in that the topcoat employed is a coating composition according to one of Claims 1 to 9. 11. The use of the coating compositions according to one of Claims 1 to 9 in the sector of automotive refinishing, especially as a topcoat.

## Revendications

1. Composition de revêtement comprenant
(A) au moins une résine de polyacrylate contenant des groupes hydroxyle, pouvant être obtenue à partir de
(a) un ester cycloaliphatique de l'acide méthacrylique et/ou de l'acide acrylique ou d'un mélange de tels monomères,
(b) un ester alkylique, contenant des groupes hydroxyle, de l'acide méthacrylique et/ou de l'acide acrylique ou de mélanges de tels monomères,
(c) éventuellement un monomère éthyléniquement insaturé, contenant des groupes hydroxyle, différent de (a) et de (b) ou un mélange de tels monomères,
(d) un ester aliphatique de l'acide méthacrylique et/ou de l'acide acrylique, différent de (a), (b) et (c), ou un mélange de tels monomères,
(e) éventuellement un hydrocarbure vinyl-aromatique différent de (a), (b), (c) et (d), ou un mélange de tels monomères et
(f) éventuellement un autre monomère éthyléniquement insaturé différent de (a), (b), (c), (d) et (e), ou un mélange de tels monomères,
et
(B) au moins un agent de réticulation,
caractérisé en ce que le composant (A) est une résine de polyacrylate contenant des groupes hydroxyle, pouvant être obtenue en polymérisant
(a) de 5 à 80% en poids du composant (a)
(b) de 10 à 50% en poids du composant (b),
(c) de 0 à 25% en poids du composant (c),
(d) de 5 à 80% en poids du composant (d),
(e) de 0 à 40% en poids du composant (e), et
(f) de 0 à 40% en poids du composant (f),
en une résine de polyacrylate ayant un poids moléculaire moyen en nombre Mn de 1 000 à 5 000, un rapport entre le poids moléculaire moyen en poids Mw et le poids moléculaire moyen en nombre Mn inférieur à 5,0 et un indice de OH de 60 à 180 mg KOH/g, la somme des proportions pondérales des composants (a) à (f) valant toujours 100% en poids, et en utilisant, en tant que composant (b), uniquement des monomères ou des mélanges de monomères qui produisent, par polymérisation exclusive du monomère respectif, une résine de polyacrylate et/ou de polyméthacrylate ayant une température de transition vitreuse de -10 à +6°C ou de +60°C à 80°C.

2. Composition de revêtement selon la revendication 1, caractérisée en ce que le composant (b) est choisi parmi le groupe constitué du méthacrylate de 3-hydroxypropyle, de l'acrylate 3-hydroxypropyle, du méthacrylate de 2-hydroxypropyle et/ou de l'acrylate de 2-hydroxypropyle.

3. Composition de revêtement selon la revendication 1 ou 2, caractérisée en ce que le composant (d) est choisi de telle sorte que l'on obtienne, par polymérisation exclusive du composant (d), une résine de polyacrylate et/ou de polyméthacrylate ayant une température de transition vitreuse de -70°C à +120°C.

4. Composition de revêtement selon l'une quelconque des revendications 1 à 3, caractérisée en ce que le composant (d) est choisi parmi le groupe constitué du méthacrylate de n-butyle, de l'acrylate de n-butyle, du méthacrylate de t-butyle, de l'acrylate de t-butyle, du méthacrylate d'isobutyle, de l'acrylate d'isobutyle, du méthacrylate de méthyle, de l'acrylate de méthyle, du méthacrylate de 2-éthylhexyle, de l'acrylate de 2-éthylhexyle, du méthacrylate de lauryle, de l'acrylate de lauryle, du méthacrylate de stéaryle, de l'acrylate de stéaryle, du méthacrylate d'éthyltriglycol, du méthacrylate de furfuryle et de l'acrylate de furfuryle.

5. Composition de revêtement selon l'une quelconque des revendications 1 à 4, caractérisée en ce que le composant (a) est choisi parmi le groupe constitué du méthacrylate de cyclohexyle, de l'acrylate de cyclohexyle, du méthacrylate d'isobornyle, de l'acrylate d'isobornyle, de l'acrylate de 4-t-butyl-cyclohexyle et/ou du méthacrylate de 4-butylcyclohexyle, et est de préférence choisi parmi le groupe constitué de l'acrylate de 4-t-butylcyclohexyle et/ou du méthacrylate de 4-butylcyclohexyle.

6. Composition de revêtement selon l'une quelconque des revendications 1 à 5, caractérisée en ce que la résine d'acrylate peut être obtenue à partir de
(a) de 5 à 30% en poids du composant (a),
(b) de 15 à 40% en poids du composant (b),
(c) de 0 à 15% en poids du composant (c),
(d) de 5 à 30% en poids du composant (d),
(e) de 10 à 30% en poids du composant (e), et
(f) de 0 à 30% en poids du composant (f),
la somme des proportions pondérales du composant (a) à (f) valant toujours 100% en poids.

7. Composition de revêtement selon l'une quelconque des revendications 1 à 6, caractérisée en ce que la résine de polyacrylate possède un poids moléculaire moyen en nombre Mn de 1 800 à 4 000, un rapport entre le rapport moléculaire moyen en poids Mw et le poids moléculaire moyen en nombre Mn de 1,8 à 4,0 et un indice de OH de 80 à 160 mg KOH/g, de préférence de 100 à 150 mg KOH/g.

8. Composition de revêtement selon l'une quelconque des revendications 1 à 7, caractérisée en ce que la composition de revêtement comprend, en tant qu'agent de réticulation (B), au moins un di- et/ou polyisocyanate, de préférence au moins un di- et/ou polyisocyanate contenant des groupes isocyanurate.

9. Composition de revêtement selon l'une quelconque des revendications 1 à 8, caractérisée en ce qu'elle comprend au moins un autre liant différent de la résine d'acrylate (A), de préférence au moins une autre résine de polyacrylate différente de (A) et/ou au moins une résine de polycondensation.

10. Procédé de production d'un revêtement multicouche protecteur et/ou décoratif sur une surface de substrat, dans lequel
(1) on applique une couche de fond pigmentée sur la surface de substrat,
(2) on forme un film polymère à partir de la couche de fond appliquée à l'étape (1),
(3) on applique, sur la couche de fond ainsi obtenue, une couche de finition transparente contenant
(A) une résine de polyacrylate contenant des groupes hydroxyle et
(B) un agent de réticulation
et ensuite
(4) on durcit conjointement le film de couche de fond et le film de couche de finition,
caractérisé en ce que l'on utilise, en tant que couche de finition, une composition de revêtement selon l'une quelconque des revendications 1 à 9.

11. Utilisation de la composition de revêtement selon l'une quelconque des revendications 1 à 9, dans le domaine des retouches pour automobiles, en particulier en tant que couche de finition.
